Europäisches Patentamt

European Patent Office

Office européen des brevets

(19)

(11) Veröffentlichungsnummer: **0 301 574**
**A1**

(12) **EUROPÄISCHE PATENTANMELDUNG**

(21) Anmeldenummer: **88112338.4**

(22) Anmeldetag: **29.07.88**

(51) Int. Cl.⁴: **C03C 25/00**

(30) Priorität: **31.07.87 DE 3725506**

(43) Veröffentlichungstag der Anmeldung:
**01.02.89 Patentblatt 89/05**

(84) Benannte Vertragsstaaten:
**AT BE CH DE ES FR GB IT LI LU NL SE**

(71) Anmelder: **FRENZELIT-WERKE GMBH & CO. KG**
**Postfach 1140**
**D-8582 Bad Berneck/Frankenhammer(DE)**

(72) Erfinder: **Schmidt, Ulrich, Dr., Dipl.-Chem.**
**Sterntalerring 116**
**D-8580 Bayreuth(DE)**
Erfinder: **Schnabel, Manfred, Dipl.-Ing. (FH)**
**Weberstrasse 22**
**D-8653 Mainleus(DE)**
Erfinder: **Füssman, Klaus**
**Seidelsberg 2**
**D-8656 Thurnau(DE)**

(74) Vertreter: **Patentanwälte Müller-Boré, Deufel, Schön, Hertel, Lewald, Otto**
**Isartorplatz 6**
**D-8000 München 2(DE)**

(54) **Thermisch stabilisierte Fasern aus Kieselsäuregläsern.**

(57) Die Erfindung betrifft thermisch stabiliserte Fasern aus Kieselsäuregläsern oder aus diesen Fasern bestehende Textilien, wobei bei diesen Fasern das Gewichtsverhältnis von Kieselsäure zu nicht kieseligen Oxiden erhöht und eine anorganische Abscheidung auf diesen Fasern aufgebracht ist, die sich dadurch auszeichnen, daß die Fasern oder Textilien erhältlich sind, indem sie, gegebenenfalls nach Säureextraktion, durch Säurebehandlung mit einer anionischen Ladung versehen werden und dann auf diese Fasern kationisches Kieselsol aufgezogen wird und sie dann mit einer Appretur versehen werden.

EP 0 301 574 A1

## Thermisch stabilisierte Fasern aus Kieselsäuregläsern

Die Erfindung betrifft thermisch stabilisierte Fasern aus Kieselsäuregläsern oder aus diesen Fasern gebildete Textilien, wobei bei diesen Fasern das Gewichtsverhältnis von Kieselsäure zu nicht kieseligen Oxiden erhöht und eine anorganische Abscheidung auf diesen Fasern aufgebracht ist.

Glasfasern aus kieselsäurehaltigen Gläsern weisen eine gute thermische Beständigkeit bis zur beginnenden Erweichungstemperatur auf. Die Erweichungstemperatur hängt von der Zusammensetzung ab und beträgt bei E-Glas z.B. ca. 600°C.

Da diese Temperatur für viele Anwendungszwecke nicht ausreicht, gibt es zahlreiche Vorschläge, diese Temperatur zu steigern.

Aus den De-ASen 10 26 925 und 28 29 413 ist die Extraktion von Glasfaser mit heißer Säure bekannt, wobei alle extrahierbaren Bestandteile möglichst weitgehend herausgelöst werden. Dies führt zwar zu Temperaturfestigkeiten von etwa 1000°C, jedoch zu sehr sprödem Material, das nicht mehr auf Textilmaschinen weiterverarbeitet werden kann.

Daher werden anschließend an die Säureextraktion Temperungen zur Veredelung der Glasfaser durchgeführt oder organische Chromverbindungen angelagert, die durch thermische Zersetzung in $CR_2O_3$ umgewandelt werden (GB-PS 10 41 996), jedoch reicht die se erzielte Festigkeit für viele Anwendungszwecke, insbesondere die Verarbeitung auf Textilmaschinen, noch nicht aus, und bei der thermischen Zersetzung von organischen Chromverbindungen entstehen erhebliche Abgasprobleme.

Weiter ist es aus der US-PS 34 79 207 bekannt Fasern aus Kieselsäuregläsern, die später mit einem Kunststoffüberzug versehen werden sollen, in einer Lösung zu behandeln, die Metallsalze enthält, welche durch Zugabe von Ammoniak in Metallhydroxide umgewandelt werden, die sich an die Fasern anlagern und später durch Erhitzen in das jeweilige Metalloxid umgewandelt werden. Aber Temperaturbeständigkeit und mechanische Eigenschaften derart behandelter Fasern lassen ebenfalls zu wünschen übrig. Schließlich ist es aus der DE-AS 28 29 413 bekannt, dabei vor der Behandlung mit dem Metallsalz das Gewichtsverhältnis von Kieselsäure zu nicht kieseligen Oxiden zu erhöhen, indem man mit Säure extrahiert und wobei man dann ein Metallsalz der Metalle Al, Ti, Zr und/oder Cr verwendet. Dabei wird der $SiO_2$-Gehalt der Glasfaser auf über 90% erhöht, was zu einer erheblichen Steigerung der Temperaturfestigkeit führt, jedoch die Fasern ebenfalls nicht mehr auf Textilmaschinen verarbeitbar macht. Außerdem führt die Weiterverarbeitung aller vorstehend beschriebener behandelter Glasfasern zu einer erheblichen Bildung von Glasstaub, was vom toxikologischen Standpunkt aus bedenklich ist.

Bei zwei älteren Vorschlägen wird nur eine mäßige Säureextraktion durchgeführt, nämlich zwischen 1 bis 10 bzw. 10 bis 30% Gewichtsverlust, und die so behandelte Faser nach dem Waschen und vor dem vollständigen Trocknen mit einem wasserdampfdichten Überzug versehen, der in der Faser eine Restfeuchtigkeit von 5 bis 7 Gew.-% verbleiben läßt. Dabei steigt die Temperaturfestigkeit um ca. 100 bis 150°C und die Fasern lassen sich noch auf Textilmaschinen verarbeiten und, was ein wichtiges Merkmal ist, führen bei der Verarbeitung nicht zur Bildung von Glasstaub.

Zur Erhöhung der thermischen Stabilität hat man auch schon anorganische Füllstoffe, wie Kieselsol, mit geeigneten organischen Bindemitteln an der Oberfläche der Faser gebunden. Dies hat den Nachteil, daß große Mengen Bindemittel erforderlich sind, um eine gute Staubfreiheit beim Verarbeiten zu erzielen. Diese hohen Bindemittelgehalte wiederum sind nachteilig bei höheren Temperaturen, da sich die organischen Binder zersetzen und zum Brennen oder zum Abscheiden unangenehmer oder giftiger Dämpfe führen. Außerdem wird das textile Verhalten umso schlechter, je höher der Bindemittelgehalt ist. Es entstehen brettartige, verhärtete Textilien.

Die Erfindung hat sich somit die Aufgabe gestellt, die Temperaturfestigkeit von Glasfasern erheblich zu steigern, ohne wesentlich an Elastizität und Verarbeitbarkeit zu verlieren und ohne Staubungsgefahr bei der Verarbeitung der stabilisierten Glasfasern.

Dies wird dadurch erreicht, daß die Glasfaser mit einer anionischen Ladung versehen wird und dann auf diese Faser kationisch geladenes Kieselsol aufgezogen wird. Durch die entgegengesetzte Ladung zwischen Faser und aufziehendem Kieselsol ergibt sich eine feste Verbindung ohne organische Bindemittel. Da Fasern aus E-Glas die am häufigsten verwendeten Fasern sind, wird die Erfindung am Beispiel von E-Glas erläutert. In gleicher Weise lassen sich aber auch die anderen üblichen glasigen Mineralfasern (zur Definition siehe Ullmanns Encyklopädie der technischen Chemie, 4. Auflage, Band 11, S. 361, Abbildung 1), also Textilglasfasern und Isolierfasern außer keramischen Fasern behandeln, die alle ähnliche Zusammensetzung haben, nämlich $SiO_2$-Gehalte zwischen 40 und ca. 70%, Aluminiumoxidgehalte zwischen knapp 2 bis 25%, Rest Flußmittel.

Das Aufladen der Glasfasern erfolgt durch Behandlung mit Säure, insbesondere bei pH 0 bis 1. Dies kann ohne Erhitzen erfolgen, dauert jedoch dann Stunden, so daß die Behandlung vorzugsweise unter Erwärmen erfolgt, indem zweckmäßig innerhalb ca. 15 bis 60 Minuten auf ca. 50°C bis dicht unter den Siedepunkt des Bades erhitzt wird, dann ca. 15 bis 90 min bei dieser Temperatur belassen und dann innerhalb von 15 bis 60 min wieder auf Umgebungstemperatur abgekühlt wird. Auf diese Faser kann dann ein kationisches Kieselsol aufgezogen werden. Solche Kieselsole sind mit Handel erhältlich, z.B. von der Firma Bayer unter der Typenbezeichnung 100 S, 200 S und 200 SH.

Das Aufladen der Glasfaser mittels Säure kann gewünschtenfalls mit einem Auswaschen säurelöslicher Bestandteile des Glases verbunden sein, je nachdem, wie lange und bei welcher Temperatur die Säurebehandlung durchgeführt wird. Als besonders zweckmäßig hat es sich erwiesen, in einer HT-Färbeapparatur üblicher Bauart, die säurefest ist, Glasseidenfilamentspulen zu behandeln, wobei bei einer Färbeapparatur mit 2000 l Flotteninhalt nach Einsetzen des Glasfilamentes das Bad innerhalb von ca. 15 bis 60 Minuten von Umgebungstemperatur auf ca. 50 bis 95°C aufgeheizt, ca. 15 bis 60 Minuten bei dieser Temperatur belassen und dann innerhalb von 15 bis 60 Minuten wieder auf Umgebungstemperatur abgekühlt oder abkühlen gelassen wird, bis die Flottentemperatur zwischen Umgebungstemperatur und ca. 30°C liegt. Dann wird 5 bis 20 g/l 30%iges Kieselsol (30% $SiO_2$-Gehalt) zugesetzt und die Faser wird bei 25 bis 30°C noch ca. 10 bis 30 Minuten behandelt. Anschließend wird gespült und neutralisiert, wobei zweckmäßig mit $NH_4OH$ bis pH 8 neutralisiert wird, damit keine Säurereste im Garn verbleiben. Das Säurebad kann auch vor der Kieselsolbehandlung abgezogen werden. Dies ist immer bevorzugt, auch wenn nur eine geringe Extraktion des Glases erfolgt und somit die Säurekonzentration im Extraktionsbad relativ gering ist. Die Glasfaser wird vorzugsweise aus dem Säurebad genommen und, ggfs. nach Zwischenspülen, in einem wässrigen Bad, welches das Kieselsol enthält, weiterbehandelt. Bei höheren Säurekonzentrationen im Extraktionsbad, insb. bei Bädern mit mehr als 10 g/l $HNO_3$ 52%ig soll immer zweibadig gearbeitet werden. D.h. daß in diesem Falle das extrahierte Glas immer aus dem Bad genommen, zwischengespült und dann in einem wässrigen Kieselsäurebad zum Aufziehen des Kieselsols weiterbehandelt wird.

Zur Einstellung von pH 0 bis 1 im Bad wird zweckmäßig $HNO_3$ 52%ig verwendet und zur besseren Benetzung wird dem Bad ein Netzmittel zugesetzt, z.B. ein nichtionogener Alkylpolyglykoläther oder ein anderes in der Textilindustrie übliches Netzmittel. 0,5 bis 5 g/l, insbesondere 1 g/l Perenin GNS hat sich als zweckmäßig erwiesen.

Es ist aus der DE-PS 28 56 884 bekannt, daß Asbestfasern nach Aufschlämmen in Wasser eine negative Ladung tragen und daß man bei Behandlung dieser Asbestpartikel mit Wasserglas, nämlich Natriumsilikat in einmolarer Lösung und langsamen Ansäueren mit Essigsäure bei einem pH-Wert von etwa 9,5 kieselsäuriges Material ausfällen kann, das praktisch ganz durch die aufgeschlämmten Asbestpartikel adsorbiert wird. Indem man weiter bis pH etwa 7,6 ansäuert, kann man dann einen ölfreundlichen Organosilanüberzug auf diese kieselsäurehaltige Schicht aufbringen. Dies ist bei Glasfaser nicht möglich, da sie sich bei bloßer Behandlung mit Wasser noch nicht auflädt und die Glasfaser durch das stark alkalische Wasserglas angegriffen würde. Außerdem wird bei dieser Arbeitsweise der DE-PS 28 56 884 keine Erhöhung der Temperaturbeständigkeit bewirkt, und zwar auch nicht bei Glasfasern, da durch den Kontakt mit dem alkalischen Wasserglas Borsäure extrahiert und Natriumionen ausgetauscht werden, was eine Schmelzpunktserniedrigung des Glases bewirkt, die durch das aufgezogene Kieselsol nicht wettgemacht wird.

Die DE-OS 29 19 503 zeigt das Aufbringen einer kationischen Schlichtungszusammensetzung, welche ein kationisches organisches filmbildendes Polymer enthält. Dieser Überzug wird danach mit einer anionischen Schlichtungszusammensetzung überzogen, welche ein anionisches filmbildendes Polymer enthält. Auch hier wird keine Erhöhung der Temperaturstabilität des Glases bewirkt. Das Glas wird lediglich für die Anwendung als Asbestersatz für Asbestzement vorbereitet. Die so aufgebrachten Schlichtemengen wären für eine nachfolgende Temperaturbelastung wegen des Vorliegens von zwei Überzügen zu hoch um für den vorgesehenen Hochtemperatureinsatz aus technischen und arbeitsplatzhygienischen Gründen tolerierbar zu sein.

Die mit Kieselsol nachbehandelte, gespülte und neutralisierte Faser wird, zweckmäßig in der gleichen App retur dann noch mit einer Textilappretur, also einem Binder mit permanentem Ausrüstungseffekt, zweckmäßig in Mischung mit einem Ausrüstungsmittel, wie es in der Textilindustrie für die permanente griffgebende Ausrüstung von Web- und Maschenwaren aus Synthesefasern, Zellulosefasern, Wolle und Naturseide und deren Mischungen verwendet wird, behandelt. Als zweckmäßig erwiesen haben sich eine selbstvernetzende Acrylat-Copolymerdispersion mit einem Feststoffgehalt von ca. 50%, wie sie z.B. unter der Bezeichnung Appretan als Binder mit permanentem Ausrüstungseffekt zum Ausrüsten von Non-Wowens und Geweben aus allen Fasermaterialien im Handel ist, insbesondere in einer Menge von 1 bis 5 g/l, vorzugsweise 3 g/l, sowie ein modifiziertes Polysiloxan, wie es z.B. unter der Bezeichnung Solosoft WA in Form einer weißen dünnflüssigen Emulsion als Ausrüstungsmittel im Handel ist, insbesondere in einer Menge von 2 bis 10 g/l, vorzugsweise 4 bis 6 g/l. Diese App retur hält im Glas einen Restwassergehalt dauernd fest, der vom Extraktionsgrad abhängt und bei geringen Extraktionsgraden mindestens 0,5 Gew.-% des Glases beträgt und bei hohen Extraktionsgraden bis 30 % bis 10 % steigen kann. Dieser Restwassergehalt muß dauernd im Glas bleiben, um die Geschmeidigkeit und Verarbeitbarkeit des Glases, z.B. auf den hier üblicherweise benutzten Textilmaschinen zu gewährleisten. Bei den hier bevorzugten Auswaschgraden von einigen Prozent beträgt der Restwassergehalt gewöhnlich 1 bis 2 Gew.-%.

Die Appretur soll daher einen wasserdampfdichten Überzug bilden.

Statt Salpetersäure kann natürlich auch eine andere Mineralsäure verwendet werden, die jedoch mit den gelösten Bestandteilen der Glasfaser keine schwerlöslichen Niederschläge bilden sollte. Die Erhöhung oder Erniedrigung der Säuremenge und/oder Temperatur bewirkt eine mehr oder weniger starke Extraktion der Glasfaser. Vorzugsweise sollte der Extraktionsgrad der Glasfaser, also der Gewichtsverlust durch die Säureextraktion, 3% des Faserausgangsgewichtes nicht überschreiten, noch bevorzugter ist eine obere Grenze von 2%, jedoch genügen, wie erwähnt, sehr geringe Auswaschgrade, selbst unter 1%, wenn nur die anionische Aufladung der Glasfaser erreicht wird. Die Anwendung von ca. 20 g/l 30%igem Kieselsol entspricht, je nach Auswaschgrad der Faser, einer Auftragsmenge von ca. 7 bis 10 Gew.-% trockenem Kieselsol, bezogen auf Endglasfaser. Da Auftragsmengen von 2 bis 5 Gew.-% bevorzugt sind, wird vorzugsweise mit einer Konzentration von 5 bis 15 g/l 30%iges Kieselsol gearbeitet. Eine Konzentration unter 5 g/l des 30%igen Kieselsols in der Flotte ist aus praktischen Gründen nicht mehr zu empfehlen.

Bei Säureextraktionsgraden bis zu 10 Gew.-% kann man einbadig arbeiten, d.h. man setzt der Säureflotte nach gewünschter Extraktion und Abkühlung auf 25 bis 30 °C das Kieselsol direkt zu und zwar zweckmäßig in einer Menge, daß praktisch alles Kieselsol auf die Faser aufzieht. Wenn der Extraktionsgrad der Glasfaser vor der Kieselsolbehandlung mehr als 10% sein soll, ist es zweckmäßig, Säureextraktion und Kieselsolbehandlung in zwei getrennten Bädern durchzuführen, da die für die erhöhten Auswaschgrade erforderlichen höheren Säurekonzentrationen von 100 bis 200 g/l an 52%iger Salpetersäure bei einer gleichmäßigen Abscheidung des Kieselsoles stören können. In diesem Fall zieht man zweckmäßig die Extraktionssäure ab, spült ggfs. die Ware mit Wasser und füllt dann das Kieselsol ein. Nachdem kationisches Kieselsol ein saures pH von ca. 3 bis 4 hat, stören Säurereste natürlich nicht.

Wie schon erwähnt, ist es aber immer bevorzugt, zweibadig zu arbeiten, also die für die Extraktion benutzte Säure abzulassen und, ggfs. nach Zwischenspülung, das wässrige Kieselsol einzufüllen.

Aufziehgrade von 1 bis 5 Gew.-%, bezogen auf getrocknete Endfaser (die aber noch das erforderliche Restwasser enthält) sind bevorzugt, insbesondere wenn der vorherige Extraktionsgrad, also die Menge an aus der Faser mit Säure extrahierten Bestandteilen, 5 bis 1 Gew.-% betrug. Dies bedeutet, daß umso weniger Kieselsol auf die Faser aufgezogen werden braucht, je stärker die Faser vorher extrahiert war, um die erforderlichen mechanischen Eigenschaften für die Weiterverarbeitung auf Textilmaschinen zu bewahren, um etwa gleiche Temperaturbeständigkeit zu erzielen. Wenn diese Weiterverarbeitung jedoch kein Erfordernis ist oder wenn besonders hohe Temperaturbeständigkeit erwünscht ist, dann kann ohne weiteres auch bei stark extrahierten Fasern eine Menge von 10 % oder mehr an Kieselsol aufgezogen werden.

Das Spülen und Neutralisieren nach der Kieselsolbehandlung beseitigt nicht nur die Säurereste im Garn, sondern auch überschüssiges Kieselsol, so daß später bei der Verarbeitung, insbesondere nach der Behandlung mit einer Appretur keine Glasstaubbildung erfolgt. Die Behandlungsdauer mit Appretur beträgt ca. 10 min in der Kälte und erfolgt zweckmäßig ebenfalls noch in der HT-Färbeapparatur. Nach dieser Behandlung wird nicht gespült, sondern der Materialträger wird aus dem Bad gezogen und getrocknet, wobei die Trocknungstemperatur von der verwendeten Appretur abhängt und gewöhnlich 120 bis 130 °C beträgt, um das Vernetzen oder die Aushärtung der Appretur sicher zu bewirken. Bei dieser Arbeitsweise trocknet die Faser nicht vollständig aus, sondern behält eine Restfeuchtigkeit von 0,5 bis 10 % je nach Extraktionsgrad, vorzugsweise 1 bis 3 % Extraktionsgraden von etwa 1 bis 5 %.

Da man den Kieselsolgehalt im Bad praktisch völlig erschöpfen kann, kann man das Säurebad, ggfs. nach Zusatz frischer Säure zum Ausgleich für verbrauchte Säure, erneut verwenden, weil die herausgelösten Flußmittelbestandteile des Glases bei der Behandlung nicht stören, bis ihre Konzentration ca. 5 Gew.-% beim einbadigen Verfahren erreicht hat.

Auf diese Weise werden die Abwasserprobleme wesentlich reduziert.

Eine E-Glasfaser, die in unbehandeltem Zustand eine Temperaturfestigkeit von etwa 600 °C hat, die sich bei einer Säureextraktion von 2% auf ca. 700 bis 750 steigert, erhält nach der Behandlung mit 10 g/l Kieselsol, was einem Aufziehgrad von ca. 4 bis 5 Gew.-% entspricht, eine Temperaturfestigkeit von ca. 800 °C. Außerdem ist durch die Kieselsolbehandlung eine deutliche Schrumpfverbesserung der extrahierten Faser zu beobachten, was sich als günstig bei der Anwendung erweist. Das folgender Beispiel erläutert die Erfindung. Es zeigt ein Ausziehverfahren, das einbadig, aber zweistufig durchgeführt wird.

Beispiel

In eine HT-Färbeapparatur (säurefest) mit 2000 l Flotteninhalt wurde ein Bad aus 7 g/l $HNO_3$, 52%ig, und 1 g/l des nichtionogenen Alkylpolyglykoläthers Perenin eingebracht. Der Materialträger wurde mit 398 kg texturiertem Glasfilament 1430 tex x 1 besetzt und eingesetzt, worauf das Bad innerhalb von ca. 50 min auf ca. 80°C erwärmt, 30 min bei dieser Temperatur gehalten und dann innerhalb von 50 min auf 30°C abgekühlt wurde (durch indirekte Kühlung). Die Flottenzirkulation erfolgte von außen nach innen bei einem Druck von 2 bar.

Dies bewirkte eine Extraktion von ca. 2 Gew.-%, bezogen auf eingesetzte Fasern.

Nach dem Abkühlen wurden 10 g/l Kieselsol SH, 30%ig, zugesetzt und die Glasfasern so bei 30°C noch 20 min behandelt. Anschließend wurde gespült und neutralisiert, wobei mit $NH_4OH$ bis pH 8 versetzt wurde, damit keine Säurereste im Garn verblieben.

Dann wurde in der gleichen Apparatur 10 min lang kalt mit Wasser behandelt, das 5 g/l des Ausrüstungsmittels Solusoft WA, ein modifiziertes Polysiloxan, und 3 g/l eines Binders mit permanentem Ausrüstungseffekt, nämlich Appretan 3450, eine selbstvernetzende Acrylat-Copolymer-Dispersion von ca. 50% Feststoffgehalt enthielt. Nach dieser Behandlung wurden die Materialträger ohne zu spülen aus dem Bad gezogen und bei 120°C getrocknet.

Die aufgezogene Kieselsolmenge betrug ca. 2 Gew.-%, bezogen auf trockene Endfaser, die etwas mehr als 1 % Restwassergehalt aufwies. Dies ist verglichen mit 0,2 % bei unbehandelter Glasfaser etwa der 5-fache Wassergehalt. Der Appreturauftrag betrug ca. 0,5 %, wiederum bezogen auf getrocknete Faser.

Wenn statt 7 g/l $HNO_3$ 10 g/l der gleichen Salpetersäure unter den sonst gleichen Bedingungen eingesetzt werden, beträgt der Extraktionsgrad ca. 3 %. Die Kieselsolaufnahme ist dann ebenfalls ca. 3 % und der Restwassergehalt ca. 1,5 % während der Appreturgehalt wiederum bei ca. 0,5 % liegt.

## Ansprüche

1. Thermisch stabilisierte Fasern aus Kieselsäuregläsern oder aus diesen Fasern bestehende Textilien, wobei bei diesen Fasern das Gewichtsverhältnis von Kieselsäure zu nicht kieseligen Oxiden erhöht und eine anorganische Abscheidung auf diesen Fasern aufgebracht ist, dadurch gekennzeichnet, daß die Fasern oder Textilien erhältlich sind, indem sie, ggfs. nach Säureextraktion, durch Säurebehandlung mit einer anionischen Ladung versehen werden und dann auf diese Fasern kationisches Kieselsol aufgezogen wird und sie dann mit einer Appretur versehen werden.

2. Fasern nach Anspruch 1, dadurch gekennzeichnet, daß 1 bis 5 Gew.-% Kieselsol, vorzugsweise 2 bis 3 Gew.-% Kieselsol, auf die Fasern aufgebracht ist.

3. Fasern nach Anspruch 1 oder 2, dadurch gekennzeichnet, daß vor dem Aufbringen des Kieselsols eine Auswaschung der säurelöslichen Bestandteile des Glases in einer Menge von 1 bis 10 Gew.-% durch Säureextraktion erfolgt ist.

4. Fasern nach einem der Ansprüche 1 bis 3, dadurch gekennzeichnet, daß sie einen wasserdampfdichten Überzug und einen Restwassergehalt von 0,5 bis 3 Gew.-% bei Extraktionsgraden bis 10 Gew.-% und 3 bis 10 % Restwassergehalt bei Extraktionsgraden über 10 % aufweisen.

5. Verfahren zur Herstellung der thermisch stabilisierten Fasern aus Kieselsäuregläsern oder aus diesen Fasern bestehenden Textilien nach Anspruch 1 bis 4, dadurch gekennzeichnet, daß man die Fasern oder Textilien durch Säurebehandlung mit einer anionischen Ladung versieht, wobei man ggfs. die Säurebehandlung zur Extraktion von säurelöslichen Bestandteilen aus dem Glas in einer Menge von bis zu 30 Gew.-% des Ausgangsglases benutzt und dann, ggfs. nach Zwischenspülung, auf diese Fasern kationisches Kieselsol aufzieht und dann die nassen Fasern ggfs. nach Spülen mit Wasser mit einer Appretur versieht.

6. Verfahren nach Anspruch 5, dadurch gekennzeichnet, daß man die Säurebehandlung mit Säuremengen, bezogen auf 52 %ige Salpetersäure, von 5 bis 100 g/l bei 60 bis 90°C während 15 bis 60 min durchführt.

7. Verfahren nach Anspruch 5 oder 6, dadurch gekennzeichnet, daß man nach Erzielung der gewünschten Säureextraktion des Glases dieses aus dem Säurebad entnimmt, ggfs. zwischenspült und dann in einem wässrigen Bad, das 5 bis 20 g/l Kieselsol enthält, bei Umgebungstemperatur oder leicht erhöhter Temperatur etwa 10 bis 30 min behandelt.

8. Verfahren nach einem der Ansprüche 5 bis 7, dadurch gekennzeichnet, daß man die Behandlung mit Kieselsol in einem Bad durchführt, das ca. 10 g/l 30%iges Kieselsol aufweist.

9. Verfahren nach einem der Ansprüche 5 bis 8, dadurch gekennzeichnet, daß man 1 bis 5 Gew.-%, vorzugsweise 2 bis 3 Gew.-% Kieselsol, bezogen auf Faserendgewicht, aufbringt.

10. Verfahren nach einem der Ansprüche 5 bis 9, dadurch gekennzeichnet, daß man die noch nasse Faser beim Appretieren mit einem wasserdampfdichten Überzug versieht.

Europäisches
Patentamt

**EUROPÄISCHER RECHERCHENBERICHT**

Nummer der Anmeldung

EP 88 11 2338

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 925 447 (E. WEBER)<br>* Ansprüche; Seite 2, Zeilen 25-30; Seite 3, Zeilen 4-14 *<br>--- | 1-10 | C 03 C 25/00 |
| A | US-A-3 454 453 (J.M. WARD)<br>* Ansprüche *<br>--- | 1 | |
| A | GB-A-2 016 432 (H. HÖLTER)<br>* Ansprüche *<br>--- | 1 | |
| A | NL-A-7 118 174 (AKZO)<br>* Anspruch 1; Seite 3, Zeilen 14-22 *<br>--- | 1 | |
| E | EP-A-0 236 735 (FRENZELIT WERKE)<br>* Ansprüche *<br>----- | 1,4-7, 10 | |
| | | | **RECHERCHIERTE SACHGEBIETE (Int. Cl.4)**<br><br>C 03 C |

Der vorliegende Recherchenbericht wurde für alle Patentansprüche erstellt

| Recherchenort | Abschlußdatum der Recherche | Prüfer |
|---|---|---|
| DEN HAAG | 25-10-1988 | BOUTRUCHE J.P.E. |